(19) Europäisches Patentamt
European Patent Office
Office européen des brevets

(11) **EP 4 535 630 A1**

(12) **EUROPEAN PATENT APPLICATION**

(43) Date of publication:
**09.04.2025   Bulletin 2025/15**

(21) Application number: **23201415.9**

(22) Date of filing: **03.10.2023**

(51) International Patent Classification (IPC):
**H02K 41/03** (2006.01)          **H02K 41/025** (2006.01)

(52) Cooperative Patent Classification (CPC):
**H02K 41/031; H02K 41/025;** H02K 2201/18;
H02K 2213/03; H02K 2213/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ABB Schweiz AG**
**5400 Baden (CH)**

(72) Inventors:
• **Flixeder, Stefan**
  **4840 Vöcklabruck (AT)**
• **Rovelli, Dario**
  **24030 Valbrembo (IT)**
• **Stacey, Derrick**
  **Atlanta, GA 30307 (US)**

(74) Representative: **Patentanwälte Pinter & Weiss OG**
**Prinz-Eugen-Straße 70**
**1040 Wien (AT)**

(54)    **AUTOMATION SYSTEM IN THE FORM OF A PLANAR MOTOR**

(57)    The present invention relates to an automation system (1) in the form of a planar motor for vertical and/or overhead operation, which comprises a stator (2) with at least one stator segment and at least one shuttle (51, 52). The at least one shuttle (51, 52) comprises a magnet unit (6) and is set up to carry objects (7) or a load (7). The stator (2) or at least one stator segment (2) comprises a plurality of magnetic elements (3), wherein the plurality of magnetic elements (3) interacts electromagnetically with the magnet unit (6) of the at least one shuttle (51, 52) in such a way, that the at least one shuttle (51, 52) lifts off from the stator surface (4) to an operation height (h) and is two-dimensionally moveable in at least two directions of movement in a movement plane formed by the stator (2) or the at least one stator segment (2). The stator (2) or stator segment (2) has additional ferromagnetic material (8). Said ferromagnetic material (8) interacts with the magnetic unit (6) of the at least one shuttle (51, 52) and is configured and arranged in such a way that a magnetic attraction force ($F_A$) is exerted on the at least one shuttle (51, 52). That magnetic attraction force ($F_A$) at least partially compensates for the gravitational force ($F_G$) of the at least one shuttle (51, 52) at an operation height (h) of the at least one shuttle (51, 52).

Fig. 2

EP 4 535 630 A1

## Description

## TECHNICAL FIELD OF THE INVENTION

The present invention relates to an automation system in the form of a planar motor for vertical and/or overhead operation, which comprises a stator with at least one stator segment and at least one shuttle with a magnet unit, wherein the at least one shuttle is set up to carry objects. The stator or at least one stator segment comprises a plurality of magnetic elements and forms a movement plane for the at least one shuttle, wherein the plurality of the magnetic elements electromagnetically interacts with the magnet unit of the at least one shuttle in such a way, that the at least one shuttle lifts off from the stator surface to an operation height and is two-dimensionally moveable in at least two directions of movement in the movement plane formed by the stator or the at least one stator segment.

## BACKGROUND INFORMATION

Planar motors are well known in prior art. US 9,202,719 B2, for example, discloses the basic structure and the mode of operation of a planar motor.

A planar motor substantially has a stator which forms a movement plane. One or more stator segments usually build the stator of the planar motor, wherein stator segments can be connected in virtually any pattern - from squares, rectangles to complex paths to traverse around other equipment or to link different working stations of a production process. One or more movable devices, so-called shuttles, can be moved mainly in two dimensions in the movement plane formed by the stator. For this purpose, magnetic elements are usually arranged on the stator, in particular on the stator segments of the planar motor. The magnetic elements can be drive coils. The drive coils are controlled by a control unit to generate a time-variable and moving magnetic field in the desired direction of movement by energizing the respective drive coils of stator. Alternatively, magnetic elements can be permanent magnets, which are moveable to generating the time-variable and moving magnetic field. Furthermore, it is also conceivable that only fixed permanent magnets are mounted on the stator as magnetic elements and the moving magnetic field is generated on the shuttle. In connection with the present disclosure, the stationary unit of the planar motor are generally referred to as stator, which comprises at least one stator segment and the devices, which are moveable in the movement plane defined by the stator are referred to as shuttles, regardless of the mode of operation.

The shuttle comprises a magnet unit which includes drive magnets (permanent magnets or electro-magnets). The drive magnets are arranged distributed two-dimensionally. The magnet unit of the shuttle or rather the drive magnets of the magnet unit interact electromagnetically with the moving magnetic field of the stator so that a drive force and a levitation force can be exerted on the shuttle. The drive force can be used to move the shuttle in the desired direction of movement. The levitation force can be used to lift off the shuttle from the stator surface to an operation height (e.g., a few millimeters to a few centimeters) and to maintain the shuttle at that constant operation height during operation (e.g., as long as the drive coils are energized or the permanent magnets of the stator are moving). Thus, for example, an air gap is created and/or configured by the levitation force. The air gap between the shuttle and the stator surface can be maintained and the shuttle can magnetically float at operation height above the stator surface in the desired direction of movement during the operation of the planar motor. Additionally, tilting forces and moments can be generated for more complex movements. A two-dimensional interaction of the magnetic fields of the stator and of the shuttles is required to enable the two-dimensional movement of the shuttles, which is characteristic for a planar motor. Therefore, one of the two magnetic fields has to be variable over time in at least two dimensions or both magnetic fields have to be variable in time in at least one dimension (being complementary to the other dimension). The magnetic elements of the stator and the drive magnets are therefore advantageously arranged in such a way that, in addition to a one-dimensional movement along the axes spanned by the movement plane (e.g., x- and y-axis based on a coordinate system defined by the movement plane), more complex two-dimensional movements of the shuttle in the transport plane are also possible.

Modern planar motors make it also possible to carry out high-precision movements of the shuttle floating above the stator surface at operation height in the direction of all six rigid body degrees of freedom. Translational movements of the shuttle in two main directions of movement (e.g., x- and y-direction based on the coordinate system fixedly defined by the movement plane) are possible with virtually no restrictions, due to the modular design of the stator - comprising one or more stator segments (segment arrangement). In addition, a translation of the shuttle in a third spatial direction ("lifting" or "lowering" of the shuttle in z-direction based on the coordinate system fixedly defined by the movement plane) and rotations of the shuttle (up to a specific deflection) can be carried out at least to a limited extent. The translational movement along the third spatial direction (vertical axis or z-axis) and the rotational movements are referred to as secondary directions of movement. The motor forces and torques required for these shuttle movements are generated by means of (electro) magnetism.

A planar motor can be used as a transport device in a production process, for example, wherein very flexible transport processes with complex movement profiles can be implemented. Such applications of a planar motor as a transport device are shown in US 9,828,192 B2, WO 2018/176137 A1, WO 2020/239930 A1 or WO 2020/239933 A1, for example.

A vertical arrangement of the planar motor, as, for example, shown in US 9,828,192 B2, WO 2020/239930 A1 or WO 2020/239933 A1, or even a configuration of a planar motor for overhead operation can be necessary to implement such applications of planar motors with flexible movement profiles. However, the applications of a planar motor, are mainly limited to horizontal arrangements of the planar motor at the moment. In the context of the present disclosure, an arrangement of the planar motor is considered as horizontal arrangement, when the stator is oriented horizontally, at a large extent, and the shuttle is on top of the stator or an upper surface of the stator forms the movement plane for the shuttle. A vertical arrangement of planar motor means that the stator forms a vertical plane, which is the movement plane of the shuttle. I.e., the shuttle moves on or above the vertically oriented stator. An arrangement of the planar motor, in which the lower surface of the stator forms the movement plane for the shuttle, is regarded as a configuration of the planar motor for overhead operation in the context of the present disclosure. I.e., the shuttle moves on or below the lower surface of the stator (e.g., to fulfill pick and place tasks, inspection tasks from the top, etc.), wherein the stator can be horizontally oriented or tilted.

One reason for the limitation of the applications of planar motors to horizontal arrangements can be seen in the higher power consumption of vertical arrangements or arrangements for overhead operation. When a planar motor is used for vertical and/or overhead operation, the gravitational force, which acts on the shuttle and on any object attached to the shuttle (e.g., product to be transported or transferred, container, camera, etc.), has to be compensated purely by the electromagnetic interaction of the magnetic elements of the stator or stator segment and the magnet unit of the shuttle, to keep the shuttle securely at the operation height or to maintain the air gap between the surface of the vertically oriented stator or of the lower side of the stator. I.e., if the magnetic elements of the stator are drive coils, for example, the drive coils have to be actively energized not only to levitate and move the shuttle, but also to compensate the gravitational force acting on the shuttle and any object attached to the shuttle. This leads to relatively high power-consumption and can reduce the dynamics of the other degrees of freedom, especially the secondary directions of movement like e.g., rotational movements.

Another even more important reason for the limited use of vertically oriented planar motors or planar motor for overhead operation is that the final resting position of the shuttle is mainly or almost exclusively determined by gravitational forces and its inertia. This means, for example, in case of a disturbance of the power supply of a stator segment or the stator or a disruption of the power supply of a stator segment or the stator (e.g., caused by an emergency stop) or a malfunction of automation system or planar motor, the shuttle moves based on its inertia and the gravitational force. In case of a horizontal arrangement of the planar motor, the movement of the shuttle would be restricted by the surface of the stator. In case of a vertical arrangement or an arrangement for overhead operation, the shuttle would fall off the stator segment or stator, because the gravitational force of the shuttle and any object attached to the shuttle is not sufficiently or no longer compensated. If drive coils, for example, are used as magnetic elements of the stator, an insufficient or missing energization of the drive coils can lead to the gravitational force of the shuttle and any object attached to the shuttle no longer being compensated. The shuttle will fall off the stator. If moveable permanent magnets, for example, are used in the stator to generate the moving magnetic field, disturbances or disruption of the power supply may lead to insufficient or missing movement of the magnets, for example, which also lead to the shuttle falling off the stator. If the shuttle falls off the stator, this can lead to damages of the shuttle, the object transported by the shuttle as well as to any other component of the automation system or the production site and even to personal injury.

Mechanical safety devices, such as e.g., nets or ropes, could be used to secure the shuttle, to prevent the shuttle from falling off the stator or stator segment in the event of a power failure or in the event of an emergency shutdown. However, the usage of nets or ropes can significantly restrict the possible applications of the planar motors and particularly restrict the possible movement paths of the shuttle. Another option of mechanical safety devices is e.g., claws or something similar, which are attached to the shuttle. These claws can be activated, e.g., extended from the bottom side of the shuttle, in the event of a power failure of the stator or a stator segment to prevent the shuttle from falling. It is known from the US 9,701,488 B2, for example, to provide shuttles of a planar motor for vertical operation with suction elements. The suction element can be extended from the bottom side of the shuttle to fix the shuttle on the surface of the stator, when the current in the drive coils falls below predefined threshold. Therefore, it would be necessary to adapt the shuttles accordingly.

## SUMMARY

The objective of the present disclosure is to provide an automation system in the form of a planar motor which enables vertical and/or overhead operation of shuttles in an energy-efficient and safe manner without any additional effort or adaptions.

These and other objectives are solved by an automation system according to the independent claim. Advantageous embodiments of the present invention are described by the dependent claims.

According to the invention, these and other objectives are achieved by an automation system in the form of a planar motor for vertical and/or overhead operation, wherein the stator has additional ferromagnetic material, interacting with the magnetic unit of the at least one shuttle and being configured and arranged in such a way that a magnetic attraction force is exerted on the at least one shuttle, that the magnetic attraction force at least partially compensating for the gravitational force of the at least one shuttle at an operation height of the at least one shuttle. The interaction of the additional magnetic material of the stator with the magnetic unit of the at least one shuttle results in a temporary induced magnetization of the additional ferromagnetic material. The magnetization causes a magnetic attraction force that acts on the shuttle and helps to keep the shuttle at its operation height when floating in the movement plan formed by the stator or stator segment. So, the power consumption necessary for the generation of the moving magnetic field and the interaction of the magnetic elements of the stator or stator segment with the magnetic unit of the at least one shuttle (e.g., for the energization of drive coils used as magnetic elements, etc.) in vertical and/or overhead operation of the planar motor can be reduced. Additionally, an adaption of the shuttle is not necessary.

In an advantageous embodiment, the ferromagnetic material is configured and arranged in such a way that, in interaction with the magnet unit of the at least one shuttle, the magnetic attraction force exerted on the at least one shuttle at least compensates for the gravitational force of the at least one shuttle, when an electromagnetic interaction between the magnetic elements of the stator and the magnet unit of the at least one shuttle is missing. The at least one shuttle ideally adheres to the stator surface due to the magnetic attraction force instead of falling, even without any electromagnetic interaction between the magnetic elements of the stator and the magnet unit of the at least one shuttle. Thus, shuttle can be place on the stator for vertical and/or overhead operation before starting the operation quite easily. Furthermore, the shuttle is kept at the stator after a power failure or emergency stop - e.g., the shuttle adheres on the (lower) stator surface.

In a particularly advantageous embodiment, the ferromagnetic material is configured and arranged in such a way that, in interaction with the magnet unit of the at least one shuttle, the magnetic attraction force exerted on the at least one shuttle at least compensates for the gravitational force of the at least one shuttle at the operation height of the at least one shuttle to maintain the at least one shuttle at the operation height as long as there is the electromagnetic interaction between the magnetic elements of the stator and the magnet unit of the at least one shuttle and to pull the shuttle towards the stator surface, when the electromagnetic interaction between the magnetic elements of the stator and the magnet unit of the at least one shuttle is reduced or fails. Thus, the at least one shuttle is kept at operation height during operation. In case the interaction between the magnetic elements of the stator and the magnetic unit of the at least one shuttle is insufficient or fails due to a disturbance of the power supply of the stator or at least one stator segment, a power failure, an emergency stop, etc., the at least one shuttle is safely pulled to the stator. I.e., the shuttle reaches a stable position instead of falling off the stator. Damage of the shuttle or other automation units or personal injuries are prevented.

It is also advantageous, if the additional ferromagnetic material is configured and arranged to further compensate for the gravitational force of the object carried by the at least one shuttle.

So, the automation system for vertical and/or overhead operation can also operate with reduced power consumption and in a safe way, when the shuttles carry objects or loads.

In a further embodiment, the additional ferromagnetic material is implemented as at least one layer which is arranged in or on the stator or stator segment. In this connection, it is also advantageous, if a distance between the at least one layer and the stator surface or the surface of the stator segment is adjustable. Thus, the distance between the at least one layer of ferromagnetic material and the stator surface can be easily adapted to the respective application of the automation system and/or the weight of the shuttle and/or the load of the shuttle, since the magnetic attraction force scales with distance between the shuttle and the ferromagnetic material or at least one layer.

Furthermore, it is also favorable, if the at least one layer consists of a plurality of thin ferromagnetic layers separated by insulation material. The lamination of the ferromagnetic material designed as a layer has the advantage that eddy-currents are reduced, which might be induced by the change of magnetic flux in the ferromagnetic material due to the movements of the shuttle. Preferably, the thin ferromagnetic layers and the insulation material are oriented orthogonal to the stator surface and as a consequence to the direction of movement of the shuttle.

In another alternative embodiment, the additional ferromagnetic material is incorporated in the magnetic elements of the stator. Especially, if the magnetic elements are drive coils, the additional ferromagnetic material can easily be incorporated - e.g., by using larger iron cores or be changing a penetration depth of the drive coils.

In a preferred embodiment of the automation system, the magnet unit of the shuttle comprises permanent magnets. Preferably, drive coils, which are energized for electromagnetic interaction with the magnet unit of the shuttle and to generate a time-variable and moving magnetic field, are used as the magnetic elements of the stator.

In a further embodiment of the automation system, a lower surface of the stator forms the movement plane, wherein the at least one shuttle floats below the lower surface of the stator during operation and adheres on the lower surface of the stator before and after operation. The automation system can be used for any possible overhead operation, especially if the stator of the automation system is tilted by any angle between a vertical and/or horizontal orientation. I.e., the stator can be oriented at any angle from almost vertical orientation to almost horizontal orientation with the shuttle floating below the lower surface of the stator or stator segment during operation.

In a special embodiment of the automation system, the stator is horizontally oriented and a lower surface of the stator forms the movement plane, wherein the at least one shuttle floats below the lower surface of the stator during operation and adheres on the lower surface of the stator before and after operation.

## BRIEF DESCRIPTION OF THE DRAWINGS

In the following, the present invention will be described in greater detail with reference to Figures 1 to 4, which show exemplary, schematic and non-limiting advantageous embodiments of the invention. In the drawings:

Fig. 1 is a schematic representation of a planar motor in horizontal arrangement in a side view;

Fig. 2 is a schematic representation of a planar motor in an arrangement for overhead operation during operation in a side view;

Fig. 3 is a schematic representation of a planar motor in an arrangement for overhead operation without electromagnetic interaction in a side view;

Fig. 4 is another schematic representation of a planar motor in an arrangement for overhead operation in a side view.

## DETAILED DESCRIPTION

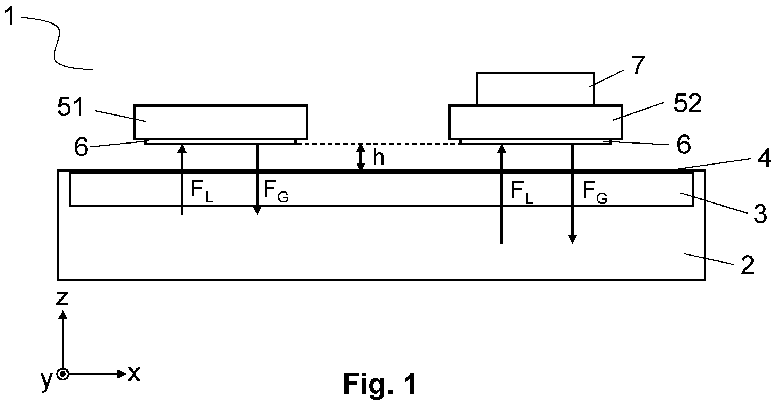

Figure 1 schematically shows a representation of an electromagnetic automation system 1 in the form of a planar motor in horizontal arrangement. The planar motor 1 comprises at least one stator segment 2, which forms the stator 2 of the planar motor in the embodiment shown in Figure 1, for example. Usually, the stator 2 of a planar motor 1 comprises a modular structure being built of two or more stator segments 2 which can be connected in virtually any pattern necessary for the respective application of the planar motor 1. The stator 2 of the planar motor 1 forms a movement plane. For the planar motor 1, a coordinate system x, y, z that can be connected to the stator 2 can be defined, wherein the movement plane can be placed in the main plane x, y, for example.

Shuttles 51, 52 are arranged in a floating manner above the movement plane or above the stator surface 4 or the surface 4 of the stator segment 2 in the horizontal arrangement of a planar motor 1 during operation. With the aid of such a planar motor 1, high-precision movements of the floating shuttles 51, 52 can be carried out in the direction of all six rigid body degrees of freedom.

Due to the modular structure of the stator 2, translational movements in two main directions of movement are virtually unrestricted. The two main directions of movement (e.g., x- and y-direction of the coordinate system) are arranged substantially parallel to the movement plane 4 of the planar motor 1. Additionally, restricted movements in the four remaining secondary directions of movement are also possible as a rule. The four secondary directions of movement comprise a translation along the secondary direction of movement in z-direction of the coordinate system (raise and lower) and all three rotations about the axes x, y, z of the coordinate system. The movements in the secondary directions of movement are typically limited physically or due to construction. E.g., the secondary direction of movement along the z-axis is limited due to the magnetic flux density, which decreases exponentially with the levitation height, the rotations about the x- and y-axes are limited substantially limited due to the space required for the rotation, i.e., again due to the necessary stroke movement and the loss of controllability (due to the limitation of the maximum forces/torques) and observability. In the case of certain planar motors, a substantially unrestricted rotation about the z-axis can be possible, but typically the rotation about the z-axis is limited due to the interaction between the stator 2 and the magnet units 6 on the shuttles 51, 52.

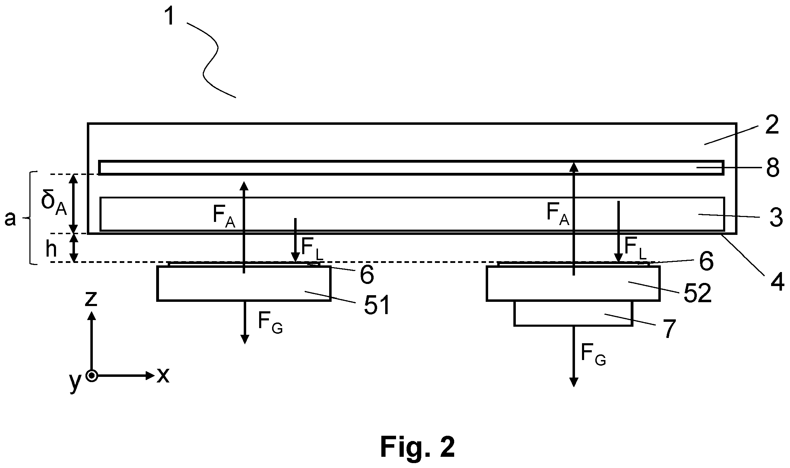

The required forces for the movements of the floating shuttles 5 are generated by means of (electro) magnetism. For this purpose, several magnetic elements 3 (e.g., drive coils, movable permanent magnets) are arranged in groups on the stator 2, which usually define the directions of movement of the shuttles 51, 52 in the movement plane 4. The drive coils 3 of the drive coil groups can be arranged relative to one another in such a way that, for example, the two main directions of movement (e.g., x- and y-direction of the coordinate system) are orthogonal to each other, but depending on the structural design of the stator 2 and the shuttles 51, 52 movements in the four secondary directions of movement are also possible to a limited extent. The magnetic elements 3 are not shown individually in Figure 1 (as well as in Figures 2 to 4), for reasons of clarity.

The control of the movement of the shuttles 51, 52 along a movement path in the movement plane 4, which is formed or defined by the stator 2 or stator segment 2. In case drive coils 3 are used as magnetic elements 3, the control of the movement of the shuttles 51, 52 is associated with the control of energizing the drive coils 3, which are sufficiently known from WO 2021/105165 A1 and WO 2021/175885 A1, for example. In principle, the drive coils 3 in the area of the shuttle 51, 52 are energized to generate a moving magnetic field. Alternatively, the stator 2 can comprises moveable permanent magnets 3 as magnetic elements 3 for generating the moving magnetic field. Then the movement of the shuttles 51, 52 is, for example, controlled by the movement of the moveable permanent magnets 3.

The shuttles 51, 52 comprise magnet units 6, usually arranged on a lower side of the shuttle 51, 52 which faces the surface 4 of the stator 2 or the respective stator segment 2. The magnet unit 6 includes drive magnets, usually permanent magnets, but also electromagnets could be used. The moving magnetic field generated by the magnetic elements 3 of the stator, e.g., either by energizing magnetic elements 3 (or drive coils) or by moving the magnetic elements 3 (or moveable permanent magnets), interacts (electro-)magnetically with the magnet unit 6 or rather with the drive magnets of the magnet unit 6 of the respective shuttle 51, 52. A drive force and a levitation force $F_L$ can be exerted on the respective shuttle 51, 52.

The drive force can be used to move the shuttle 51, 52 in the desired direction of movement in the movement plane.

The levitation force $F_L$ generated by magnetic elements 3 can be used to lift off the shuttle from the stator surface 4 to an operation height h (e.g., a few millimeters). Additionally, the levitation force $F_L$ can maintain the shuttle 51, 52, for example, constantly at the operation height h during operation, but it can also be used to move the shuttle 51, 52 in the direction of the z-axis, for example. So, an air gap between the shuttle 51, 52 and the stator surface 4 can be created and/or configured by the levitation force $F_L$, since the levitation force $F_L$ generated by magnetic elements 3 scales with magnetic flux (density) between the magnetic field of the magnetic elements 3 and the magnet unit 6 of the shuttle 51, 52 and thus with the operation height h or the air gap. The shuttle 51, 52 can magnetically float at operation height h above the stator surface 4 in the desired direction of movement during the operation of the planar motor 1. Therefore, the levitation force $F_L$ generated by energizing the drive coils has to balance at least the gravitational force $F_G$ of the shuttle 51, 52 for the lift-off of the shuttle 51, 52. Figure 1, for example, shows two exemplary shuttles 51, 52. The first shuttle 51 does not carry any object 7 or load 7, therefore the levitation force $F_L$ only has to balance the gravitational force $F_G$ of the first shuttle 51 to lift the first shuttle 51 to the operation height h and to keep it there. The second shuttle 52 carries an object 7 or load 7 (e.g., a product to be transferred, a container, etc.), therefore the levitation force $F_L$ has to balance a gravitational force $F_G$, which is the sum of the gravitational force of the second shuttle 52 and the gravitational force of the object 7, to lift off the second shuttle from the stator surface 4 and to keep the second shuttle 52 at operation height h.

If the electromagnetic interaction of magnetic elements 3 of the stator 2 with the magnet units of the shuttles 51, 52 is reduced or fails - e.g., due to a permanent or short-term disturbance or disruption of the power supply of the stator 2, the levitation force $F_L$ can be reduced or even zero. This may happen, if the drive coils 3 used as magnetic elements 3 are not (enough) energized during operation or if the movement of the permanent magnets used as magnetic elements 3 are not moved (fast enough). The shuttle 51, 52 can no longer maintain the operation height h. If the levitation force $F_L$ is reduced, the shuttle 51, 52 may move on a reduced height h above the stator surface 4. If the levitation force $F_L$ is zero e.g., due to a power failure, the shuttle 51, 52 moves based on the gravitational force $F_G$ and on inertia. I.e., the shuttle 51, 52 drops onto the stator surface 4, since in the horizonal arrangement of the planar motor 1 the gravitational force $F_G$ of the shuttle 51, 52 largely points in the direction of the stator surface 4, which limits the movement of the shuttle 51, 52. Any movement of the shuttle 51, 52 on the stator surface 4 can be at least reduced by friction.

Figure 2 schematically shows an exemplary embodiment of an electromagnetic automation system 1 in the form of a planar motor which is configured and arranged for overhead operation. The planar motor 1 comprises a stator 2 with at least one stator segment, which forms the movement plane. For the reason of clarity, Figure 2 shows a stator 2 comprising only one stator segment 2, but also configurations of planar motors 1 for overhead operation can comprise two or more stator segments 2 to build complex movement planes. In overhead operation, the lower surface 4 of the stator 2 forms the movement plane for the shuttle 51, 52. The shuttles 51, 52 are arranged on the lower stator surface 4 with the magnet unit 6 of the respective shuttles 51, 52 facing the surface 4 of the lower side of stator 2 and moving above the movement plane, which is formed by the lower surface 4 of the stator 2. The magnetic elements 3, which generate the magnetic field to lift off and to move the shuttles 51, 52, are arranged close to the lower surface 4 of the stator 2, wherein the units to control the stator 2 (e.g., the energization of the drive coils or the movement of permanent magnets) can be arranged above the stator 2. The stator 2 of the planar motor 1 can be oriented horizontally or tilted with respect to a horizontal orientation.

In the embodiment, as shown in Figure 2, for example, the horizontal arrangement of Figure 1 is rotated 180 degrees, with the stator 2 being arranged horizontally and the shuttles 51, 52 being arranged on the lower stator surface 4. But overhead operation of a planar motor 1, as defined in the present disclosure, includes any embodiment of a planar motor 1 in which the shuttle 51, 51 moves on or below the lower side of the stator 2, e.g., when the stator 2 deviates from a horizontal orientation (e.g., the stator 2 being tilted).

During the overhead operation of the planar motor 1, the moving magnetic field is generated with the help of the magnetic elements 3 (e.g. drive coils or moveable permanent magnets) or the magnetic elements 3 of the stator 2 interact electromagnetically with the magnet units 6 of the shuttles 51, 52 in such a way that the shuttles 51, 52 are floating in the movement plane or below the stator surface 4 at the operation height h. Figure 2 also shows two exemplary shuttles 51, 52, wherein the first shuttle 51 does not carry any object 7 or load 7 and the second shuttle 52 carries an object 7 or load 7 (e.g., product, container, camera, etc.). The gravitational force $F_G$ of both shuttles 51, 52 have to be compensated to the extent to keep the shuttles 51, 52 at their respective operation position at operation height h during operation. I.e., that the gravitational force $F_G$ of the first shuttle 51 has to be compensated by the stator 2 and that the gravitational force $F_G$ of the second shuttle 52 and the object 7 carried by the second shuttle 52 has to be compensated by the stator 2. If drive coils 3 are used as magnetic elements 3, for example, the compensation can be achieved by an appropriate energization of the drive coils 3 of the stator 2 or stator segment 2 during operation. The energization of the drive coils 3 can generate a levitation force $F_L$, which should keep the respective shuttles 51, 52 at the operation height h during operation.

Furthermore, the stator 2 or the stator segment 2 of the planar motor 1 has additional ferromagnetic material 8 (e.g., iron, cobalt, nickel, etc.). The ferromagnetic material 8 interacts with the magnet unit 6 of the shuttles 51, 52, wherein a passive magnetic attraction force $F_A$ is generated. Furthermore, the ferromagnetic material is configured and arranged in such a way that the generated magnetic attraction force $F_A$, which exerts on the respective shuttle 51, 52, at least partially compensates the gravitational force $F_G$ of the respective shuttle 51, 52 and the object 7 carried by the respective shuttle 52, if applicable, at operation height h of the respective shuttle 51, 52. For the first shuttle 51, the passive attraction force $F_A$ has to at least partially compensated the gravitational force $F_G$ of the first shuttle 51 at operation height h, for example. For the second shuttle 52, the passive attraction force $F_A$ has to at least partially counterbalance the gravitational force $F_G$ of the second shuttle 52 and of the object 7 carried by the second shuttle 52 at operation height h, for example.

The passive magnetic attraction force $F_A$ results from temporary induced magnetization of the additional ferromagnetic material 8 due to the magnets of the magnet unit 6 of the shuttle 51, 52. Preferably, the magnets of the magnet unit 6 are permanent magnets. The extent of the magnetic attraction force $F_A$ scales with the magnetic flux density B between the shuttle 51, 52 and the additional ferromagnetic material 8 and thus with the distance a between the shuttle 51, 52 and the ferromagnetic material 8. The maximum magnetic flux density B can be described by the following formula (1).

$$(1) \quad B = B0 * e^{-\frac{\pi}{\tau} * (h + \delta A)}$$

with B0 being the magnetic flux density on the magnet surface (in the middle homogenous region), with $\tau$ being the pole width, with h being the operation height of the shuttle 51, 52 and $\delta_A$ being the distance between the ferromagnetic material 8 and the stator surface 4. The e stands for the Euler number e and $\pi$ stands for the number $\pi$.

During the operation of the planar motor 1, the distance a between the shuttle 51, 52 and the ferromagnetic material 8 is a combination of the distance $\delta_A$ between the ferromagnetic material 8 and the stator surface 4 and the operation height h of the respective shuttle 51, 52. If the magnetic attraction force $F_A$ resulting from the (temporary) interaction of the ferromagnetic material 8 and the magnet unit 6 of the shuttle 51, 52 at least partly compensates for the gravitational force $F_G$ of the shuttle 51 or of the shuttle 52 and the object 7 carried by the shuttle 52, in the operating point at operation height h of the shuttle 51, 52, the power consumption of the magnetic elements 3 (e.g., for energizing the drive coils or for moving the moveable permanent magnets) and consequently the levitation force $F_L$ can be reduced. In a static situation, the power consumption is reduced, if the attraction force $F_A$ of the distance a being less than two times the gravitational force $F_G$ holds.

Moreover, if the magnetic attraction force $F_A$ - exerting on the shuttle 51, 52 in the operation point at operation height h of the shuttle 51, 52 - at least compensates for the gravitational force $F_G$ of the shuttle 51 or the shuttle 52 and the object 7 carried or is even higher than the gravitational force $F_G$ of the shuttle 51 or the shuttle 52 and the object 7 carried, the shuttle 51, 52 is kept at operation height h during operation and is pulled towards the stator 2 or the stator surface 4 in case of a reduced or failing electromagnetic interaction between the magnetic elements 3 of the stator 2 and the magnet unit (6) of the shuttle 51, 52. I.e., that, for example, the energization of the drive coils 3 used as magnetic elements 3 is reduced or zero or that, for example, there is reduced or no movement of the permanent magnets used as magnetic elements 3.

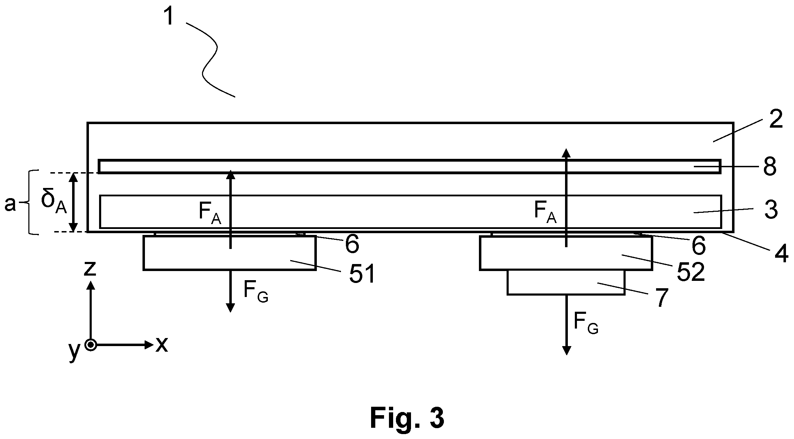

In consequences, the shuttle 51, 52 reaches a stable position on the stator surface 4 instead of falling. Since this principle does not only hold for overhead operation of a planar motor 1 (as shown in Figures 2 and 3), but for any orientation of the stator (e.g., overhead operation with a tilted stator 2, vertical arrangement of the stator 2, etc.), a stator 2 or stator segment 2 of a planar motor 1 can be mounted on a robot or a gantry, for example, to fulfil tasks as an actuator, of picking and placing objects 7, of transferring objects 7, etc. The additional ferromagnetic material 8 of the stator 2 or stator segment 2 assures that the shuttle 51, 52 does not fall, whenever the electromagnetic interaction of the magnetic elements 3 of the stator 2 and the magnet unit 6 of the respective shuttle 51, 52 is reduced or fails.

Figure 3, for example, shows an automation system 1 or planar motor 1 for overhead operation with a missing electromagnetic interaction between the magnetic elements 3 of the stator 2 and the magnet unit 6 of the shuttle 51, 52 - e.g., in a situation when the drive coils 3 are de-energized or the permanent magnets 3 are not moving. This situation can occur, for example, before the operation of the planar motor 1 is started or after a power failure (e.g., a disruption of power supply of the stator 2 or a single stator segment 2, an emergency stop, etc.). The shuttles 51, 52 adhere to the stator surface 4 due to the magnetic attraction force $F_A$ resulting from the (temporary) interaction of the ferromagnetic material 8 and the magnet unit 6 of the shuttle 51, 52. The magnetic attraction force $F_A$ at least has to compensate for the gravitational force $F_G$ of the shuttle 51, if the shuttle does not carry any object 7. If the shuttle 52 carries an object, the magnetic attraction force $F_A$ at least has to compensate for the gravitational force $F_G$ of the shuttle 52 and the carried object 7.

The magnetic attraction force $F_A$, preferably, has to be adapted, for example, for the specific application of the planar motor (e.g., weight of the shuttle 51, 52 used; load situation or weight of the object carried) to ensure a safe operation in overhead operation. I.e., especially, that the shuttles 51, 52 adhere to stator surface 4 with zero coil current and/or are securely pulled towards the stator surface 4, when the energization of the drive coils is reduced or becomes zero. This adaption can be done, for example, by adapting the operation height h of the respective shuttle 51, 52 to the specific load situation of the shuttle 51, 52, the specific weight of the shuttle 51, 52 used, etc. I.e., for example, that the first shuttle 51 without any object 7 can float a greater operation height h (from the stator surface 4) as the second shuttle 52, which carries an object 7. So, a carried object 7 depending on the specific object weight reduces the controlled air gap between the shuttle 51, 52 and the stator surface 4.

This adaption can also be done during the design phase of the planar motor 1, for example, by adapting the magnetic reluctance or magnetic resistance of the ferromagnetic material 8. The magnetic reluctance of the ferromagnetic material 8 depends, for example, on the permeability and/or on the geometry or shape of additional the ferromagnetic material 8 used.

This additional ferromagnetic material 8, for example, can be incorporated in the magnetic elements 3 of the stator 2 or stator segment 2. I.e., in case of drive coils 3 as magnetic elements 3, these can be designed to include the additional ferromagnetic material 8 (e.g., larger iron core, penetration depth of the drive coils, etc.).

Alternatively, the additional ferromagnetic material 8 can be implemented - as exemplary shown in Figures 2 and 3 - as at least one layer 8. The at least one ferromagnetic layer 8 can be arranged within the stator 2 or stator segment 2 or it can be arranged on the stator 2 or stator segment 2. In the course of the design of the planar motor 1 - stator 2 or respective stator segment 2 - the distance $\delta_A$ between the ferromagnetic layer 8 and the stator surface 4 can be defined, for example. Besides the geometry of the ferromagnetic layer 8, also the permeability of the ferromagnetic material 8 can be used as design parameter.

In a particular embodiment of the planar motor 1, the distance $\delta_A$ between the ferromagnetic layer 8 and the stator surface 4 can be adjusted manually or automatically to the respective application of the planar motor 1 and/or the loading situation of the shuttles 51, 52 before or during operation of the planar motor 1. Therefore, the distance $\delta_A$ between the at least one ferromagnetic layer 8 and the stator surface 4 is designed to be variable. The adaption can be done, for example, with the help of adjusting screws, which are used to place the layer 8 in the desired distance $\delta_A$. Alternatively, mechanical latches at various distances $\delta_A$ from the stator surface 4 can be used. Depending on the load situation, the ferromagnetic layer 8, for example, is then fixed at the appropriate mechanical latches at a fixed distance to the stator surface 4. It is also possible to use a servomotor to automatically adapt the distance $\delta_A$ between the ferromagnetic layer 8 and the stator surface 4.

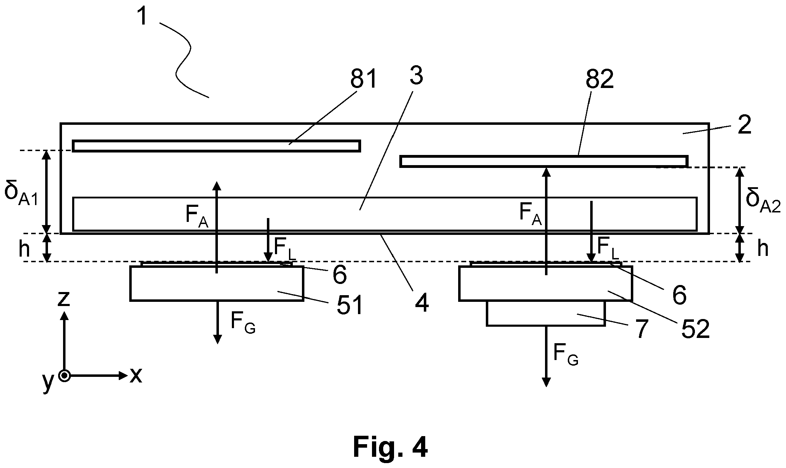

Alternatively, more than one ferromagnetic layer 8 can be arranged in the stator 2 or stator segment 2. Such a preferred embodiment is shown as example in Figure 4. Depending on the load situation of the shuttle 51, 52, the respective ferromagnetic layer 81, 82 can be positioned on different distances $\delta_{A1}$, $\delta_{A2}$. As shown in Figure 4, a first ferromagnetic layer 81, which interacts with the first shuttle 51 without any load 7, is for example positioned on a first distance $\delta_{A1}$ from the stator surface 4. A second ferromagnetic layer 82, which interacts with the second shuttle 52 carrying the load 7, is for example positioned on a second distance $\delta_{A2}$ from the stator surface 4. Since the magnetic attraction force $F_A$ resulting from the (temporary) interaction of the second ferromagnetic layer 82 and the magnet unit 6 of the second shuttle 52 has at least partly to compensate for the gravitational force $F_G$ of the second shuttle 52 and carried load 7, the second distance $\delta_{A2}$ is, for example, smaller than first distance $\delta_{A1}$ or the second magnetic layer 82 is positioned closer to the stator surface 4 than the first magnetic layer 81. Additionally, the stator 2 or the stator segment can be designed in such a way that the distances $\delta_{A1}$, $\delta_{A2}$ between the ferromagnetic layers 81, 82 and the stator surface 4 can be manually or automatically adapted e.g., to the respective application of the planar motor 1 and/or the loading situation of the respective shuttle 51, 52 before or during operation of the planar motor 1.

Furthermore, the ferromagnetic material 8, preferably, consists of a plurality of thin ferromagnetic layers (lamination), which are separated by insulation material. Ideally, the layers of the ferromagnetic material and of the insulation material are oriented orthogonal to the stator surface 4 and as a consequence to the direction of movement of the shuttle 51, 52. The lamination of the ferromagnetic material 8 has the advantage that the eddy-currents are reduced, which might be induced by the change of magnetic flux in the ferromagnetic material 8 due to the movements of the shuttle 51, 52.

Although the invention was described with reference to Figures 2 to 4 showing embodiments of an automation system 1 for overhead operation with a horizontally oriented stator, it can equally be applied to automation systems 1 in the form of planar motors with a vertical arrangement for vertical operation, planar motors 1 for overhead operation with a stator 2 or stator segments 2, which are arranged tilted relative to a vertical and/or horizontal orientation, and planar motors 1 for any combination of overhead and vertical operation.

Ideally, an automation system 1 in the form of a planar motor, as described above and exemplary shown in the Figure 2 to 4, can be used for product inspection and/or "pick and place"-tasks and/or manipulating products. During the product inspection from top, the shuttle 51, 52 can carry a camera 7, for example, or the camera is integrated into the shuttle 51, 52. The shuttle 51, 52 with camera 7 can then be moved in the movement plane at operation height h below the stator surface 4 to inspect products from top. It is also possible, that the shuttle 51, 52 is configured to grip an object and to transfer the object or to manipulate a product from top. The shuttle 51, 52 then can carry the respective actuator 7 e.g., to grip, hold and transfer the object or to manipulate the object or product.

Furthermore, two or more shuttles 51, 52 (e.g., three shuttles) can be combined by connecting the shuttles 51, 52 with links and joints to form a similar link kinematic to so-called delta robots of two or more axes. If only three shuttles 51, 52 are combined, a kinematic for e.g., overhead operation can be formed which can translate, rotate and change the orientation based on the automation system's state or product requirements. Furthermore, using multiple robots based on combined shuttles 51, 52 of a planar motor 1 for overhead and/or vertical operation together can expand to offer configurations of automation systems and offers dynamic collaboration of robots.

## REFERENCE SIGNS

| 1 | Electromagnetic automation system |
|---|---|
| 2 | Stator or Stator segment |
| 3 | Magnetic elements |
| 4 | Stator surface |
| 51, 52 | Shuttle |
| 6 | Magnet unit |
| 7 | Object or Load |
| 8 | Ferromagnetic material |
| 81, 82 | Ferromagnetic layer |

| $F_L$ | Levitation force |
|---|---|
| $F_G$ | Gravitational force |
| h | Operation height |
| $F_A$ | magnetic Attraction force |
| $\delta_A$ | Distance between stator surface and ferromagnetic material |
| $\delta_{A1}, \delta_{A2}$ | Distance between stator surface and ferromagnetic layer |
| a | Distance between shuttle and ferromagnetic material |
| x, y, z | Axes of the coordinate system |

## Claims

1. An automation system (1) in the form of a planar motor for vertical and/or overhead operation, comprising:

   - a stator (2) comprising at least one stator segment, wherein the stator (2) comprises a plurality of magnetic elements (3) and forms a movement plane;
   - at least one shuttle (51, 52) with a magnet unit (6), wherein the at least one shuttle (51, 52) is set up to carry objects (7);

   wherein the plurality of magnetic elements (3) electromagnetically interacts with the magnet unit (6) of the at least one shuttle (51, 52) in such a way, that the at least one shuttle (51, 52) lifts off to an operation height (h) from the stator surface (4) and is two-dimensionally moveable in at least two directions of movement in the movement plane formed by the stator (2), **characterized in, that** the stator (2) has additional ferromagnetic material (8), interacting with the magnet unit (6) of the at least one shuttle (51, 52) and being configured and arranged in such a way that a magnetic attraction force ($F_A$) is exerted on the at least one shuttle (51, 52), that the magnetic attraction force ($F_A$) at least partially compensating for the gravitational force ($F_G$) of the at least one shuttle (51, 52) at an operation height (h) of the at least one shuttle (51, 52).

2. The automation system (1) according to claim 1, **characterized in, that** the ferromagnetic material (8) is configured and arranged in such a way that, in interaction with the magnet unit (6) of the at least one shuttle (51, 52), the magnetic attraction force ($F_A$) exerted on the at least one shuttle (51, 52) at least compensates for the gravitational force ($F_G$) of the at least one shuttle (51, 52), when an electromagnetic interaction between the magnetic elements (3) of the stator (2) and the magnet unit (6) of the at least one shuttle (51, 52) is missing.

3. The automation system (1) according any one of the previous claims, **characterized in, that** the ferromagnetic material (8) is configured and arranged in such a way that, in interaction with the magnet unit (6) of the at least one shuttle (51, 52), the magnetic attraction force ($F_A$) exerted on the at least one shuttle (51, 52) at least compensates for the gravitational force ($F_G$) of the at least one shuttle (51, 52) at the operation height (h) of the at least one shuttle (51, 52) to maintain the at least one shuttle at the operation height (h) as long as there is the electromagnetic interaction between the magnetic elements (3) of the stator (2) and the magnet unit (6) of the at least one shuttle (51, 52) and to pull the shuttle towards the stator surface (4), when the electromagnetic interaction between the magnetic elements (3) of the stator (2) and the magnet unit (6) of the at least one shuttle (51, 52) is reduced or fails.

4. The automation system (1) according any one of the previous claims, **characterized in, that** the additional ferromagnetic material (8) is configured and arranged to further compensate for the gravitational force ($F_G$) of the object (7) carried by the at least one shuttle (52).

5. The automation system (1) according any one of the previous claims, **characterized in, that** the additional ferromagnetic material (8) is implemented as at least one layer (8, 81, 82) which is arranged in or on the stator (2) or stator segment (2).

6. The automation system (1) according to claim 5, **characterized in, that** a distance ($\delta_A$, $\delta_{A1}$, $\delta_{A2}$) between the at least one layer (8, 81, 82) and the stator surface (4) or the surface (4) of the stator segment (2) is adjustable.

7. The automation system (1) according to claim 5 or 6, **characterized in, that** the at least one layer (8, 81, 82) consists of a plurality of thin ferromagnetic layers separated by insulation material.

8. The automation system (1) according any one of the claims 1 to 4, **characterized in, that** the additional ferromagnetic material (8) is incorporated in the magnetic elements (3).

9. The automation system (1) according any one of the previous claims, **characterized in, that** the magnet unit (6) of the shuttle (51, 52) comprises permanent magnets.

10. The automation system (1) according any one of the previous claims, **characterized in, that** the magnetic elements (3) of the stator (2) are drive coils (3).

11. The automation system (1) according any one of the previous claims, **characterized in, that** a lower surface (4) of the stator (2) forms the movement plane, wherein the at least one shuttle (51, 52) floats below the lower surface (4) of the stator during operation.

12. The automation system (1) according to claim 11, **characterized in, that** the stator (2) is tilted by any angle between a vertical and/or horizontal orientation.

13. The automation system (1) according any one of the claims 1 to 9, **characterized in, that** the stator (2) is horizontally oriented and a lower surface (4) of the stator (2) forms the movement plane, wherein the at least one shuttle (51, 52) floats below the lower surface (4) of the stator during operation.

**Fig. 1**

**Fig. 2**

**Fig. 3**

**Fig. 4**

EP 4 535 630 A1

Europäisches
Patentamt

European
Patent Office

Office européen
des brevets

# EUROPEAN SEARCH REPORT

Application Number

EP 23 20 1415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BUCAK MIRSAD ET AL: "A new design concept of magnetically levitated 4 pole hybrid mover driven by linear motor", 2017 IEEE INTERNATIONAL CONFERENCE ON ROBOTICS AND AUTOMATION (ICRA), IEEE, 29 May 2017 (2017-05-29), pages 596-601, XP033126815, DOI: 10.1109/ICRA.2017.7989073 [retrieved on 2017-07-21] * the whole document * | 1,2,4,5, 7-11,13 | INV. H02K41/03 H02K41/025 |
| X | US 10 312 787 B2 (BOSCH GMBH ROBERT [DE]) 4 June 2019 (2019-06-04) * figure 2 * | 1,2,4,5, 7-13 | |
| A | HAN-WOOK CHO ET AL: "Design Considerations of EM-PM Hybrid Levitation and Propulsion Device for Magnetically Levitated Vehicle", IEEE TRANSACTIONS ON MAGNETICS, IEEE, USA, vol. 45, no. 10, 1 October 2009 (2009-10-01), pages 4632-4635, XP011277159, ISSN: 0018-9464, DOI: 10.1109/TMAG.2009.2023998 * the whole document * | 4 | |
| A | CHANG-HYUN KIM ET AL: "Zero-power control of magnetic levitation vehicles with permanent magnets", CONTROL AUTOMATION AND SYSTEMS (ICCAS), 2010 INTERNATIONAL CONFERENCE ON, IEEE, PISCATAWAY, NJ, USA, 27 October 2010 (2010-10-27), pages 732-735, XP031836818, ISBN: 978-1-4244-7453-0 * the whole document * | 4 | |

TECHNICAL FIELDS SEARCHED (IPC)

H02K

-/--

The present search report has been drawn up for all claims

| Place of search | Date of completion of the search | Examiner |
|---|---|---|
| The Hague | 1 March 2024 | Le Chenadec, Hervé |

EPO FORM 1503 03.82 (P04C01)

page 1 of 2

Europäisches
Patentamt

European
Patent Office

Office européen
des brevets

## EUROPEAN SEARCH REPORT

Application Number

**EP 23 20 1415**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHAO CHUAN ET AL: "Analysis of Quasi-Zero Power Characteristic for a Permanent Magnetic Levitation System With a Variable Flux Path Control Mechanism", IEEE/ASME TRANSACTIONS ON MECHATRONICS, IEEE SERVICE CENTER, PISCATAWAY, NJ, US, vol. 26, no. 1, 23 September 2020 (2020-09-23), pages 437-447, XP011838328, ISSN: 1083-4435, DOI: 10.1109/TMECH.2020.3026086 [retrieved on 2021-02-16] * the whole document * | 1 | |

TECHNICAL FIELDS
SEARCHED      (IPC)

The present search report has been drawn up for all claims

| Place of search | Date of completion of the search | Examiner |
|---|---|---|
| The Hague | 1 March 2024 | Le Chenadec, Hervé |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 1415**

This annex lists the patent family members relating to the patent documents cited in the above-mentioned European search report.
The members are as contained in the European Patent Office EDP file on
The European Patent Office is in no way liable for these particulars which are merely given for the purpose of information.

**01-03-2024**

| Patent document cited in search report | | Publication date | Patent family member(s) | | Publication date |
|---|---|---|---|---|---|
| US 10312787 | B2 | 04-06-2019 | CN | 107005138 A | 01-08-2017 |
| | | | DE | 102014225171 A1 | 09-06-2016 |
| | | | EP | 3231073 A1 | 18-10-2017 |
| | | | US | 2017331359 A1 | 16-11-2017 |
| | | | WO | 2016091441 A1 | 16-06-2016 |

EPO FORM P0459

For more details about this annex : see Official Journal of the European Patent Office, No. 12/82

**REFERENCES CITED IN THE DESCRIPTION**

**Patent documents cited in the description**

- US 9202719 B2
- US 9828192 B2
- WO 2018176137 A1
- WO 2020239930 A1
- WO 2020239933 A1
- US 9701488 B2
- WO 2021105165 A1
- WO 2021175885 A1